Europäisches Patentamt

European Patent Office

Office européen des brevets

(11) Publication number: **0 466 162 A1**

# EUROPEAN PATENT APPLICATION

(21) Application number: **91111585.5**

(22) Date of filing: **12.07.91**

(51) Int. Cl.5: **H04N 5/225**, H04N 5/76

(30) Priority: **13.07.90 JP 186545/90**

(43) Date of publication of application:
**15.01.92 Bulletin  92/03**

(84) Designated Contracting States:
**DE FR GB**

(71) Applicant: **MATSUSHITA ELECTRIC INDUSTRIAL CO., LTD.**
**1006, Oaza Kadoma**
**Kadoma-shi, Osaka-fu, 571(JP)**

(72) Inventor: **Shibaike, Narito**
**9-12-1-2-301, Korigaka**
**Hirakata-shi, Osaka-fu(JP)**

(74) Representative: **Eisenführ, Speiser & Strasse**
**Martinistrasse 24**
**W-2800 Bremen 1(DE)**

(54) **Image recording apparatus.**

(57) An image recording apparatus which comprises an imaging device (2), a drive circuit (4) for driving the imaging device, a signal processing circuit (5) for processing an output signal from the imaging device, and a magnetic, optical or magneto-optical recorder (8) for recording an output signal from the signal processing circuit on a recording medium, said imaging device having a scanning frequency which is lower than a scanning frequency of a standard TV system at least during a recording operation.

*Fig . I(a)*

EP 0 466 162 A1

## BACKGROUND OF THE INVENTION

**(Field of the Invention)**

The present invention relates to an image recording apparatus for recording a videoed picture signal on a recording medium such as, for example, a magnetic recording disc, an optical recording disc or a magneto-optical recording disc.

**(Description of the Prior Art)**

Except for some types of video tape recorder for professional application specifically designed to accomplish a slow-motion reproduction of videoed pictures, most image recording apparatuses now in use are so designed that the scanning frequency of an imaging device or tube can be driven at a scanning frequency of a standard television system which may be a vertical scanning frequency of 60 Hz in the case of the NTSC television scheme or a vertical scanning frequency of 50 Hz in the case of the PAL television scheme thereby to enable a video signal to be recorded on a recording medium, for example, a magnetic recording tape or any one of the various discs, in synchronism with this frequency. As a rule, one field signal of the video signal is recorded on each of a plurality of recording tracks formed on the recording medium.

In the case of a video disc designed exclusively for use in reproduction of information recorded thereon, however, a technique is employed to increase the recording capacity by reducing the number of revolution of the disc at an outer peripheral portion thereof relative to that of an inner peripheral portion thereof to keep the linear velocity of recorded tracks at a constant value and, therefore, one field of the video signal is not necessarily recorded on each circumferentially extending recording track of the disc.

When it comes to a recording of the videoed picture signal, even though the number of revolutions of the disc varies with the position of a recording head, the scanning frequency of an imaging device or tube is driven at the scanning frequency of a standard television system thereby to enable a video signal to be recorded on a recording medium in synchronism with this frequency.

In the case of video tape recorders operable with a magnetic tape of 1 inch in width designed for TV broadcasting purpose, a recording system is employed wherein one field signal is recorded on every four tracks in the recording medium. Third recording system was employed in practice before the helical scan recording system was developed, and does not require any modification to an imaging means, but it may be considered that the number of tracks is increased in correspondence with an increase in number of recording heads used.

On the other hand, in the video tape recorders exclusive for slow-motion reproduction, an extremely clear reproduction of pictures can be accomplished by selecting the scanning frequency of the imaging device, the tape transport speed and the number of revolutions of the cylinder which are three times those used in the standard video tape recorder so that during a time corresponding to one field information corresponding to three fields can be recorded. Such video tape recorders are largely employed for TV broadcasting of sports programs.

However, in the image recording apparatus of the above described general construction, a problem associated with the recording wavelength tends to occur when an attempt is made to manufacture them in a compact size.

More specifically, in order to reduce the size of the cylinder carrying the rotary heads in the video tape recorder, and if the currently employed recording wavelength is desired to be maintained, the number of the heads employed, the tape wrap angle at which a length of magnetic tape is turned around the cylinder and the number of revolutions of the cylinder are all required to be increased, increasing a load on the recording means.

On the other hand, if the disc for use in a disc apparatus is to be reduced in size, the number of turn of the disc and the recording capacity are required to be increased and reduced, respectively, and a reduction in size of the recording medium requires the use of a highly precise recording means. In either case, it is difficult to accomplish a reduction in size and also in manufacturing cost.

Nevertheless, a reduction in recording wavelength results in a reduction in quality of images and also in structuring the heads.

While the video tape recorder designed exclusively for the slow-motion reproduction works very well for special-effect reproduction, processing speeds of mechanisms and signals tend to become three times those used in the standard or ordinary video tape recorder, bringing about an increased load on the structure and circuits of the apparatus while making the latter complicated. For this reason, the video tape recorder for the slow-motion reproduction is exclusively for professional application in which a reduction in size and manufacturing cost is no matter of importance, and cannot be placed in the market for household use.

As hereinabove discussed, the prior art image recording apparatuses even though varying in detail have their own problems associated with a reduction in size and manufacturing cost.

## SUMMARY OF THE INVENTION

The present invention has therefore been devised with a view to substantially eliminating the above discussed problems inherent in the prior art image recording apparatuses and is intended to provide an improved image recording apparatus which can be manufactured compact in size and at a reduced manufacturing cost without increasing the load on the recording means and the signal processing circuit and which is effective to provide high quality images.

To this end, an image recording apparatus according to the present invention comprises an imaging device, a drive circuit for driving the imaging device, a signal processing circuit for processing an output signal from the imaging device, and a recording means for recording an output signal from the signal processing circuit on a recording medium. The imaging device has a scanning frequency which is lower than a scanning frequency of a standard TV system at least during a recording operation.

According to the present invention, since at least during the recording operation the scanning frequency of the imaging device is chosen to be lower than that of the standard TV system, the signal processing speed can be lowered enough to reduce the load on the circuit as a whole, making it possible to reduce the manufacturing cost of the image recording apparatus.

Also, if the recording means is driven at a standard or ordinary speed, the amount of information to be recorded on a single track can be reduced, making it possible to maintain the recording wavelength even if the image recording apparatus is made compact, with no image quality reduced.

Moreover, in correspondence with the reduction in amount of information to be recorded as discussed above, both of the cylinder and the recording medium can be reduced in size and, therefore, a reduction in both size and power of the recording means as a whole can be accomplished, leading to a reduction in manufacturing cost.

No reduction in quality occurs even during a still reproduction of pictures. So far as a motion reproduction of pictures is concerned, there is no practical problem even though images of an object in quick motion may be somewhat deteriorated, and there is also no practical problem as far as a normal or usual video photographing is concerned.

## BRIEF DESCRIPTION OF THE DRAWINGS

This and other objects and features of the present invention will become clear from the following description taken in conjunction with a preferred embodiment thereof with reference to the accompanying drawings, in which:

Fig. 1(a) is a schematic circuit block diagram showing an image recording apparatus embodying the present invention;

Fig. 1(b) is a timing chart showing various signals used in the circuit of Fig. 1(a) in timed relationship;

Fig. 2 is a diagram showing a length of magnetic tape having recorded tracks formed thereon by the image recording apparatus of the present invention; and

Fig. 3 is a diagram showing a disc having recorded tracks formed thereon by the image recording apparatus of the present invention.

## DETAILED DESCRIPTION OF THE EMBODIMENT

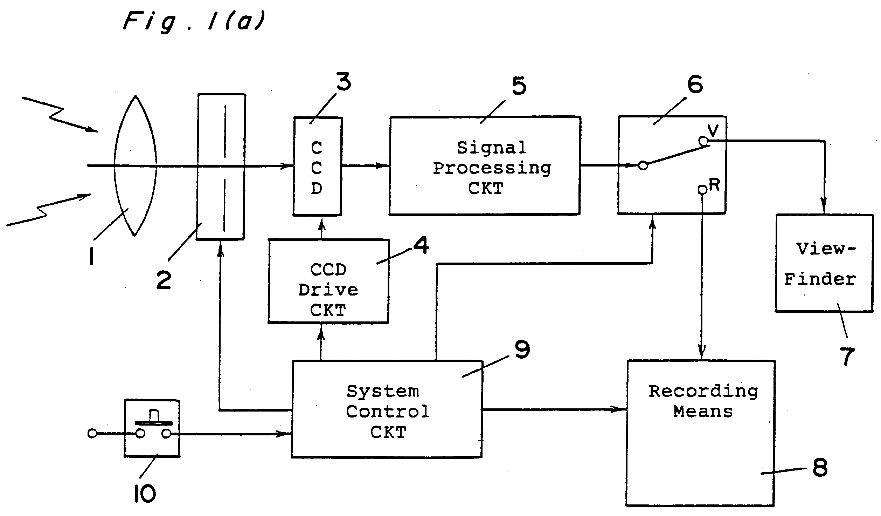

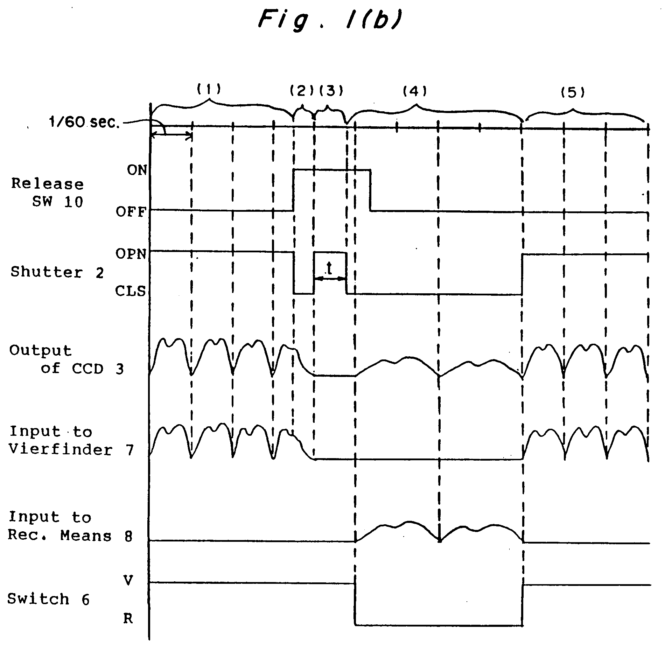

Referring to the drawings, Fig. 1(a) illustrates a schematic circuit block diagram of an image recording apparatus embodying the present invention and Fig. 1(b) illustrates waveforms of various functional devices in the image recording apparatus shown in timed relationship.

In Fig. 1(a), imagewise rays of light entering an objective lens assembly 1 fall on a charge-coupled device (CCD) 3 through a shutter 2. The charge-coupled device 3 is driven by a CCD drive circuit 4, and an output signal emerging from the charge-coupled device 3 is supplied to a signal processing circuit 5. An output from the signal processing circuit 5 is supplied to a changeover switch 6 having a movable contact engageable selectively with fixed contacts V and R which are electrically connected with a viewfinder 7 and a recording means 8, respectively, the position of said movable contact of the changeover switch 6 being

3

controlled by a command issued from a system control circuit 9.

The recording means 8 referred to above may be a video tape recorder, a magnetic disc device, an optical disc device, a magneto-optical disc device or any other suitable recording device. The system control circuit 8 equally controls the shutter 2, the CCD drive circuit 4 and the recording means 8. Reference numeral 10 represents a release switch. A signal to be recorded is a standard TV signal based on the NTSC scheme known to those skilled in the art.

The operation of the image recording apparatus of the illustrated construction will now be described in connection with a recording of a frame still picture. In describing the operation of the image recording apparatus, reference is made to the timing chart shown in Fig. 1(b).

(1) When the image recording apparatus is not in a recording mode, the shutter 2 is open at all times, and imagewise rays of light having passed through the lens assembly 1 and then through the shutter 2 fall on the charge-coupled device 3 to form an image to be recorded. This image is videoed by the charge-coupled device 3 driven by the CCD drive circuit 4 and is subsequently supplied from the signal processing circuit 5 to the viewfinder 7 through the change-over switch 6 having its movable contact then engaged to the fixed contact V as shown in Fig. 1(a). A video photographer can monitor the image reproduced through the viewfinder 7.

(2) When the release switch 10 is then closed by the video photographer, the system control circuit 9 is set in a recording mode and, in response to a command issued therefrom, the shutter 2 is closed and, after electric charges stored in the charge-coupled device 3 have been depleted completely, a reading operation (or scanning operation) of the charge-coupled device 3 is interrupted to execute a recording.

(3) During a video-photographing, the shutter 2 is first opened and is again closed after a predetermined exposure time t has passed. During this predetermined exposure time t, the charges accumulated on the charge-coupled device 3 are recorded by the recording means 9 as a still image.

(4) Thereafter, the changeover switch 6 is operated in synchronism with the recording means 8 to have its movable contact engaged to the fixed contact R and the charge-coupled device 3 again assumes the reading operation to provide an output to the signal processing circuit 5. At this time, the outputting speed at which the output is provided to the signal processing circuit 5 is set to 30 Hz which is one half of the standard NTSC scanning frequency. In other words, one field is scanned in 1/30 second. Accordingly, as a matter of course, it takes 1/15 second to scan one frame. The signal processing circuit 5, in response to this output, feeds the recording means 8 to cause the latter to accomplish the recording.

(5) After the recording has been completed, the shutter 2 is opened and the changeover switch 6 is held in position with the movable contact engaged to the fixed contact V, with the image recording apparatus returning to the initial condition.

It is to be noted that, in items (2) and (3), similar effects as those discussed above can be obtained even though no shutter 2 is employed, provided that the charge-coupled device 3 be adequately designed to accomplish, for example, a high speed reading operation.

On the other hand, in the case of a motion picture, it is important to use the shutter 2 as an aperture and, considering the image viewable through the viewfinder 7 during a non-recording, the use of the shutter 2 is essential even in the case of the still picture. The shutter 2 may be of a construction comprising a plurality of mechanical blades or diaphragms, or it may be in the form of a spatial light modulating device such as a liquid crystal shutter. In either case, the shutter 2 is preferred to have a high speed response, an excellent light shielding property and a sufficient durability.

As described hereinabove, the image recording apparatus returns to the initial condition after the recording operation has completed. However, where the image is desired to be rendered viewable through the viewfinder 7, the driving frequency at which the charge-coupled device 3 is driven may be set at 60 Hz. In this case, the viewfinder 7 may be employed in the form of a regular or standard viewfinder. Nevertheless, the shooting is continued where an object in motion is to be recorded and, without the changeover switch 6 employed, the output may be separated so that it can be supplied to the viewfinder 7. In such case, arrangement is required such that the charge-coupled device 3 can be driven at the driving frequency of 30 Hz and the viewfinder 7 be designed so as to accommodate it.

The recording means 8, upon receipt of the output from the signal processing circuit 5, records the signal using 60 Hz as a fundamental frequency as is the case with the conventional method. In other words, although not show, where the recording means 8 is a video tape recorder, the number of revolutions of the cylinder carrying the rotary heads is chosen to be 1,800 rpm as is the case with a video tape recorder operable with a length of magnetic tape of 1/2 inch in width and the sequential recording of the signal is carried out by the use of two heads spaced 180° circumferentially from each other while the tape is turned 180° around the head-carrier cylinder.

4

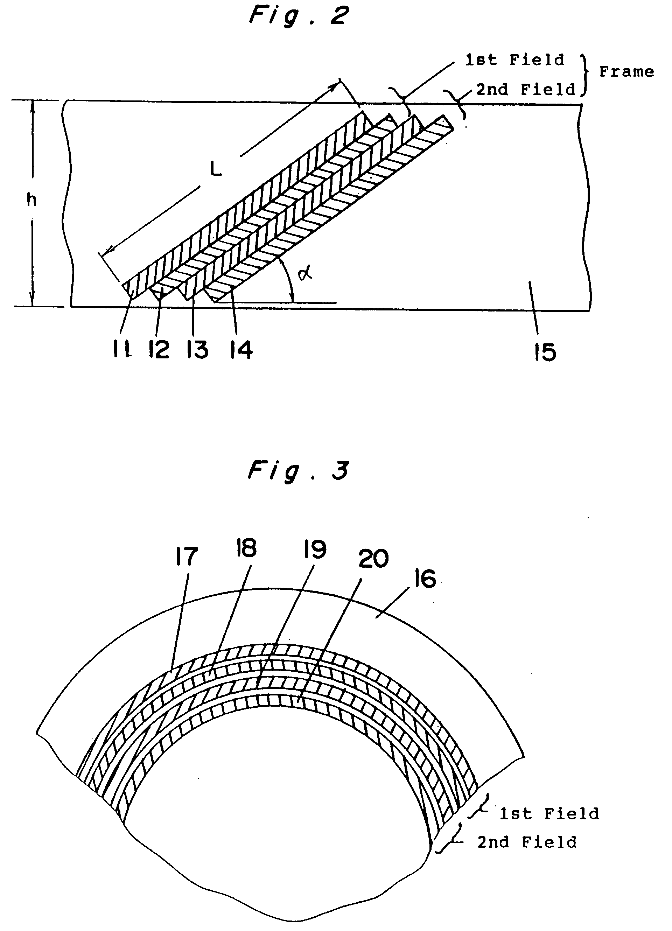

However, since unlike the prior art the output signal from the signal processing circuit 5 is a signal scanned at 30 Hz, only information corresponding to 1/2 field is recorded by one head on a recording signal on one track and the information corresponding to the remaining 1/2 of the field is recorded by the other head on the next succeeding track. This operation is repeated also for the next succeeding field and, therefore, one frame of image can be recorded on four tracks in total. A recorded condition on the tape at this time is shown in Fig. 2 and, as shown therein, the length L of each of the tracks 11 to 14 suffices to be 1/2 of that accomplished by the prior art image recording apparatuses since the amount of information, if the conventional recording wavelength is desired to be retained, is one half of that required according to the prior art.

In other words, given a lead angle $\alpha$, the width h of the tape 15 may be one half of the conventional tape and, therefore, the cylinder can be correspondingly short-walled.

The relative velocity between the heads and the tape 15 can also be reduced to one half of that used in the prior art technique and, therefore, the cylinder may have a diameter which is one half of that used in the prior art apparatus. Accordingly, not only can the apparatus be manufactured compact, but the power required to drive the cylinder and the tape 15 can also be reduced.

On the other hand, it can be expected that similar effects as those described above can be obtained even though the recording means 8 is employed in the form of a recording apparatus utilizing a disc such as, for example, the magnetic or optical disc recording apparatus.

While Fig. 3 illustrates tracks formed on a disc, information corresponding to one half of each field can be recorded on the track 17 since the disc 16 is driven at 60 Hz if the number of revolutions of the disc 16 during a recording is chosen to be 3,600 rpm which is the same as used in, for example, an electronic still camera. In view of this, arrangement is made so t hat a first field and a second field can be recorded on the tracks 17 and 18 and the tracks 19 and 20, respectively, by switching the plural heads each time the disc 16 completes one revolution, by moving one head at a high speed or by moving the head so that the tracks 17 to 20 can represent as if they form a single spiral track. As a result of this, if the conventional recording wavelength is desired to be maintained, the disc can be made to have a size which is one half of the conventional disc and, since the recording wavelength can be made twice in a condition in which conventional disc diameter (for example, 47 mm in the case of a disc for use in the electronic still camera), it is possible to adapt to an optical disc device wherein the recording wavelength is longer than that in the magnetic recording system. Specifically, if it is adapted to the optical disc device having grooves, the track pitch between each neighboring tracks can be reduced to 1/50 of that used in association with the electronic still camera, it can be expected that the recording capacity can be considerably increased.

The following table illustrates how the still image recording apparatus embodying the present invention can be manufactured compact in size and simple in structure, in relation to the unified format employed for the currently marketed electronic still cameras.

## Table 1

| | Electronic Still Camera | Super-compact Still Camera | Optical Disc Camera |
|---|---|---|---|
| No. of Revolutions (rpm) | 3,600 | 3,600 | 3,600 |
| CCD Scanning Frequency (MHz) | 60 | 30 | 30 |
| Recording Frequency (MHz) | 7.5 | 3.75 | 3.75 |
| Recording Wavelength ($\mu$m) | 0.76 | 0.76 | 1.51 |
| Linear Velocity (m/s) | 7.5 | 3.8 | 7.5 |
| Recording Range (mm) | ø30 to ø40 | ø15 to ø20 | ø30 to ø40 |
| Disc Diameter (mm) | ø47 | ø25 | ø44 |
| Track Pitch ($\mu$m) | 100 | 50 | 2 |
| Track Width ($\mu$m) | 60 | 40 | 1.5 |
| No. of Tracks | 50 | 50 | 2,500 |
| No. of Recording Fields | 50 | 25 | 1,250 |
| No. of Recording Frames | 50 | 12 | 625 |
| Recordable No. of High Definition TV Pictures | Impossible | Impossible | 125 |
| Size of Jacket Size (mm) | 60x54x3.6 | 35x30x2.5 | 60x54x4.4 |
| Recording Mechanism | Compact | Extremely compact | Compact & Simple |
| Head Positioning Accuracy | Fair | Good | Excellent |
| Picture Quality | Good | Good | Good |
| Reliability | Good | Good | Excellent |

In Table 1, the super-compact still camera and the optical disc camera both referred to therein are those employing the still image recording apparatus embodying the present invention. More specifically, the super-compact still camera referred to therein corresponds to a version of the conventional electronic still camera which has been reduced 1/2 in size while the recording wavelength used in the conventional electronic still camera is maintained. The optical disc camera is of a size comparable to the conventional electronic still camera, but has a recording wavelength increased twice that in the conventional electronic still camera.

Hereinafter, items of design specification listed in Table 1 and results obtained will be explained.

**a)** Number of Revolutions:

This number of revolutions of 3,600 rpm (60 Hz) is the frequency providing the basis for the recording and remains the same as in the conventional apparatuses.

**b)** CCD Scanning Frequency:

The scanning frequency of the existing NTSC system which is 60 Hz is rendered to be 30 Hz insofar as the super-compact still camera and the optical disc camera are concerned.

**c)** Recording Frequency:

While in the electronic still camera an FM modulated recording is carried out wherein the white peak value is set to 7.5 MHz, the frequency of 3.75 MHz is the highest available frequency in the super-compact still camera and the optical disc camera since it may be equal to a 1/2 division.

**d)** Recording Wavelength:

Since it is not of a type wherein the linear velocity is fixed, this is evaluated in terms of the shortest recording wavelength available when a signal of highest recording frequency is recorded on the innermost track. However, in the super-compact still camera and the optical disc camera, the existing recording wavelength could be maintained in the case of the magnetic recording system, or the twofold recording wavelength could be obtained in the case of the optical recording system.

**e)** Linear Velocity:

This represents a value measured at the outermost track.

**f)** Recording Range:

In the case of the super-compact still camera, the recording range was chosen to be 1/2 of the standards employed in the electronic still camera, but in the case of the optical disc camera, the same recording range as that in the electronic still camera was employed.

**g)** Disc Diameter:

In the case of the super-compact still camera, a disc of a size greater than the diameter of the outermost track by 5 mm was employed. Ac compared with the conventional electronic still camera has a size greater by 7 mm than it, the disc used in the super-compact still camera can rotate stably due to a reduction in diameter and, therefore, no problem occurred even when a disc of a diameter greater by 5 mm than the diameter of the outermost track. In the case of the optical disc camera, the diameter of 44 mm was chosen in reference to the fact that the existing compact disc is greater in diameter than the diameter of the outermost track by 4 mm, however, no practical problem occurred.

**h)** Track Pitch:

In the case of the electronic still camera, for minimizing a thermal expansion and contraction of the magnetic disc resulting from a change in temperature and humidity and the positioning accuracy of the heads, a relatively large track pitch is employed. However, since the extent to which the thermal expansion of the magnetic disc may affect is small, if it is made compact, and the positioning accuracy of the head can be enhanced to an extent corresponding to a reduction in total distance over which they are moved, a half value could be attained with no problem.

In the case of the optical disc camera, since the track pitch of 1 $\mu$m is possible since the optical disc having grooves is employed. However, the track pitch of 2 $\mu$m was chosen to given a tolerance to the spot diameter of a semiconductor laser.

**i)** Track Width:

In the super-compact still camera, since a reduction in size of the apparatus has made it possible to secure a sufficient positioning accuracy of the heads, the track width of 40 $\mu$m could be attained.

However, in the optical disc camera, the track width of 1.5 $\mu$m was chosen to give a somewhat tolerance to the spot diameter of a semiconductor laser.

**j)** Number of Tracks:

The number of tracks available for the optical disc camera is 50 times that in the magnetic disc, i.e., 2,500 tracks available indeed.

**k)** Number of Recording Fields:

Since one field requires two tracks, the super-compact still camera can record 25 fields which is one half that used in the existing cameras and the optical disc camera can record 1,250 fields which is 25 times that in the existing camera.

**l)** Number of Recording Frames:

Since one frame is constructed with two fields, the optical disc camera can record 625 frames.

**m)** Recordable Number of High Definition TV Pictures:

Since the amount of information according to the high definition TV system will be about 5 times that according to the NTSC system, the optical disc camera can record 125 frames of high definition TV pictures, but the magnetic disc has no value for a device since the recordable number of high definition TV pictures is too small.

**n)** Size of Jacket Size:

The super-compact still camera can have a size which is 1/4 of that of the existing camera, and the optical disc camera could be assembled having a somewhat increased thickness as compared with the existing disc since the thickness of the disc increases.

**o)** Recording Mechanism:

Since the diameter of the disc used in the super-compact still camera is 50% reduced, an extremely compact recording mechanism could be assembled.

On the other hand, the optical disc camera requires no disc protection mechanism and is free from a problem associated with a touching of the heads, the structure can be simplified.

**p)** Head Positioning Accuracy:

Since in the super-compact still camera the total distance of movement of the head is small, the head positioning accuracy could be favorably improved, but since in the optical disc camera the disc is provided with the grooves, the head positioning accuracy could be more enhanced.

**q)** Picture Quality:

No deterioration in picture quality occurred in any one of the super-compact still camera and the optical disc camera because of the still picture.

**r)** Reliability:

In the case of the optical disc camera, since the disc has surfaces formed with respective protective layers and will not be adversely affected by ambient magnetism, the reliability of recorded information is very high.

As hereinbefore described, considering the unified standards used in the existing electronic still cameras, the employment of the present invention makes it possible to manufacture the extremely compact magnetic disc camera and also to manufacture the optical disc camera having an increased recording capacity for a comparable size.

It is to be noted that, in order to reproduce the tape or disc which has been recorded with the use of the image recording apparatus of the present invention, various methods can be contemplated. By way of example, any one of the methods wherein, while a dedicated display device capable of scanning at 30 Hz is employed, the same mechanism to that used for recording is employed for the reproduction; wherein in the case of the still picture the use is made of a frame memory or field memory while a standard or regular display device is employed; and wherein the medium is reproduced at 120 Hz using a separately assembled device dedicated for only the playback. In addition, a recording and reproducing mechanism capable of reproducing information at a speed which is twice during a reproducing operation may be structured.

Thus, according to the illustrated embodiment of the present invention, the scanning frequency of the charge-coupled device 3 is chosen to be 30 Hz which is one half the scanning frequency of the NTSC TV system at least during a recording operation. Accordingly, the signal processing speed can be lowered to a value corresponding to one half the signal processing speed observed in the prior art and, therefore, it is possible to reduce the load on the circuits including the signal processing circuit 5 and also to reduce the manufacturing cost of the image recording apparatus.

Also, if the recording means is driven at 60 Hz as is the case with the prior art, the amount of information to be recorded on a single track can be reduced 50%, making it possible to maintain the recording wavelength even if the image recording apparatus is made compact, with no image quality reduced.

Moreover, not only can the diameter of the cylinder be reduced 50% as compared with the prior art, but also the height thereof can be reduced. Yet, in correspondence with the reduction in amount of information to be recorded as discussed above, a reduction in both size and power of the recording means as a whole can be accomplished, leading to a reduction in manufacturing cost.

From the foregoing full description of the present invention, it has now become clear that the present invention is effective to provide the image recording apparatus wherein a reduction in size and manufacturing cost of the image recording apparatus is possible with no increase in load on the recording means and/or the signal processing circuit and and no reduction in picture quality is observed.

Although the present invention has been fully described in connection with the preferred embodiment thereof with reference to the accompanying drawings, it is to be noted that various changes and modifications are apparent to those skilled in the art. By way of example, although the scanning frequency of the charge-coupled device 3 during the recording has been described as chosen to be 1/2 of the scanning frequency of the NTSC TV system, it may not be always limited thereto in the practice of the present invention.

Also, the image recording apparatus embodying the present invention may be designed to record a TV signal based on the PAL TV system, although reference has been made to the NTSC TV system in the foregoing description. In such case, since the standard scanning frequency according to the PAL TV system is set to 50 Hz, the scanning frequency has to be chosen 25 Hz where the 1/2 scanning frequency is employed as is the case in the illustrated embodiment.

Accordingly, such changes and modifications are to be understood as included within the scope of the present invention as defined by the appended claims, unless they depart therefrom.

**Claims**

1. An image recording apparatus which comprises an imaging device, a drive circuit for driving the imaging device, a signal processing circuit for processing an output signal from the imaging device, and a recording means for recording an output signal from the signal processing circuit on a recording medium, said imaging device having a scanning frequency which is lower than a scanning frequency of a standard TV system at least during a recording operation.

2. The apparatus as claimed in Claim 1, wherein the scanning frequency of the imaging device is 1/n of the scanning frequency of the standard TV system, wherein n represents an integer.

3. The apparatus as claimed in Claim 2, wherein the recording means is a video tape recorder and one field of a video signal is recorded on n tracks on a tape.

4. The apparatus as claimed in Claim 2, wherein the recording means is a disc apparatus and one field of a video signal is recorded on n tracks on a disc.

5. The apparatus as claimed in Claim 1, further comprising a shutter disposed in front of the imaging device and wherein said imaging device is driven in synchronism with selective opening and closure of the shutter to record a still image.

6. The apparatus as claimed in Claim 1, wherein the scanning frequency of the imaging device is set to be equal to the scanning frequency of the standard TV system during a period other than the recording operation.

7. The apparatus as claimed in Claim 1, further comprising a changeover switch having two switching positions, said changeover switch operable to supply an output signal from the signal processing circuit to the recording means when in one of the switching positions, but to supply the output signal from the signal processing circuit to a viewfinder when in the other of the switching positions.

8. The apparatus as claimed in Claim 6, further comprising a changeover switch having two switching positions, said changeover switch operable to supply an output signal from the signal processing circuit to the recording means when in one of the switching positions, but to supply the output signal from the signal processing circuit to a viewfinder when in the other of the switching positions.

*Fig. 1(a)*

EP 0 466 162 A1

# Fig. 1(b)

EP 0 466 162 A1

## Fig. 2

## Fig. 3

12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP - A2 - 0 358 172 <br> (CANON) <br> * Fig. 22 * | 1 | H 04 N 5/225 <br> H 04 N 5/76 |
| A | | 5,7,8 | |
| Y | DE - A1 - 2 338 956 <br> (ROBERT BOSCH) <br> * Page 4, lines 2-14 * | 1 | |
| A | US - A - 4 779 137 <br> (TOJO) <br> * Fig. 4 * | 1 | |
| A | EP - A2 - 0 371 717 <br> (SONY) <br> * Fig. 2; column 1, lines 26-38 * | 1,2 | |
| A | US - A - 4 574 319 <br> (KONISHI) <br> * Fig. 1; column 3, lines 65-67 * | 1,3,4 | TECHNICAL FIELDS SEARCHED (Int. Cl.5) |
| A | US - A - 4 853 785 <br> (OVSHINSKY) <br> * Abstract; fig. 7; column 15, lines 16-24 * | 1,4 | H 04 N 3/00 <br> H 04 N 5/00 <br> H 04 N 7/00 |

The present search report has been drawn up for all claims

| Place of search | Date of completion of the search | Examiner |
|---|---|---|
| VIENNA | 27-09-1991 | BENISCHKA |

EP 91111585.5